# DEMANDE DE BREVET EUROPEEN

(11) **EP 1 024 278 A1**
(43) Date de publication de la demande: **02.08.2000**
(21) Numéro de dépôt: 00400206.9
(22) Date de dépôt: 27.01.2000
(51) Int. Cl.: F02M 21/02

(54) **Injecteur doseur-distributeur de gaz pour moteur à combustion interne**

(30) Priorité: 29.01.1999 FR 9901044
(71) Demandeur: RENAULT, 92513 Boulogne Billancourt Cedex (FR); Mannesmann VDO AG Control Systems, D65824 Schwalbach (DE)
(72) Inventeur: Maissant, Jean-Pierre, 92500 Rueil Malmaison (FR); Walter, Mathieu, 78630 Orgeval (BE)
(74) Mandataire: Fernandez, Francis Lionel

(57) **Abrégé**

L'invention concerne un injecteur doseur-distributeur d'un gaz dans les cylindres d'un moteur à combustion interne, alimenté au moins par un carburant gazeux, sous forme liquide ou comprimée, réalisé dans un corps cylindrique connecté à un détendeur du gaz et ayant N sorties, tel que l'entrée (48) du gaz étant située au centre d'une première extrémité (42) du corps cylindrique (40), il est symétrique en amont du dosage pour assurer une densité homogène du gaz, et tel qu'il comporte un organe régulateur de débit du gaz, réalisé par un piston (46), dont la section débitante réalisant le contrôle du dosage constitue une séparation du flux principal du gaz, entrant dans l'injecteur, en N flux secondaires de sortie, identiques et indépendants les uns des autres, en régime sonique, ce piston étant piloté en débit pulsé pour assurer une ouverture totale des N sorties (45) de gaz pendant une durée limitée.

## Description

L'invention concerne un injecteur de gaz, de type doseur-distributeur, d'un système d'injection monopoint distribué gazeux pour moteur à combustion interne alimenté par un carburant gazeux, du Gaz de Pétrole Liquifié GPL, ou du Gaz Naturel pour Véhicule GNV, par exemple. Cet injecteur de gaz constitue un perfectionnement à un injecteur doseur-distributeur déjà protégé par la demande de brevet français N° 98 14423, déposée au nom de RENAULT.

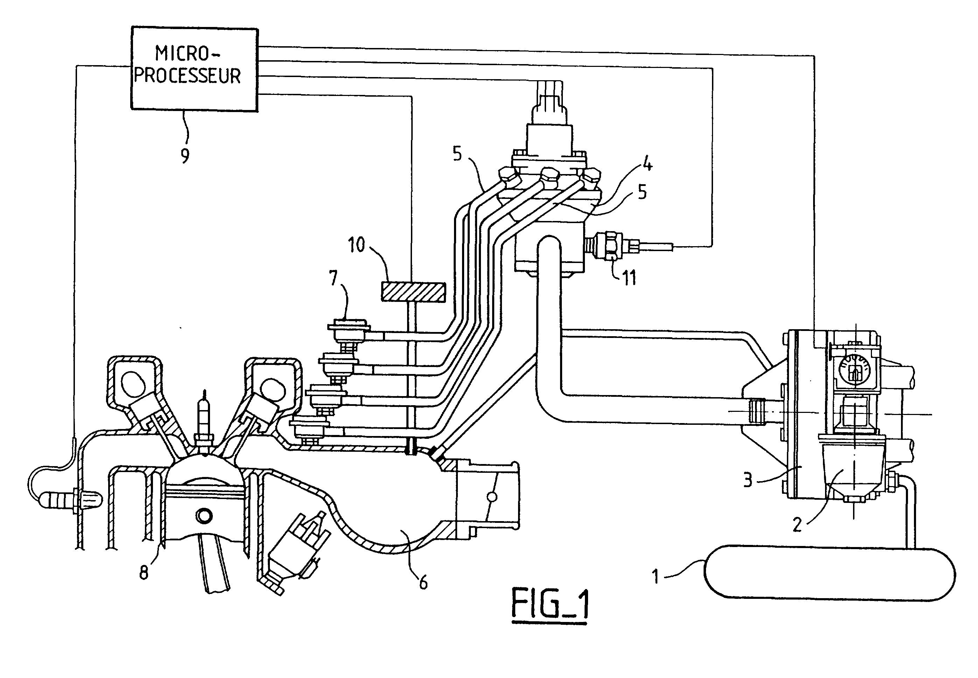

Selon un mode de réalisation actuel de la marque KOLTEC-NECAM, l'architecture d'un tel système, représenté sur le schéma de la figure 1, comprend un réservoir 1 de Gaz de Pétrole Liquéfié, GPL ou de Gaz Naturel sous pression, relié au moyen d'une électrovanne 2 de sécurité à un détendeur 3. Le rôle de ce dernier est de réchauffer le carburant GPL ou GNV en phase gazeuse qui se détend dans cet organe et éventuellement, de vaporiser le carburant GPL, de réguler la pression du gaz à sa sortie à une valeur donnée, constante ou variable, et de couper l'alimentation du moteur en gaz par l'intermédiaire de l'électrovanne normalement fermée et placée en amont du circuit de détente.

La sortie du détendeur 3 est reliée à un actuateur doseur-distributeur de gaz 4, de type injecteur, qui reçoit le gaz à une pression égale à la pression de sortie du détendeur pour en assurer le contrôle du débit, et sa distribution sur chaque branche 5 d'un collecteur d'admission d'air 6 du moteur. Une électrovanne 11 placée sur ce doseur-distributeur permet d'assurer une coupure rapide de l'alimentation de gaz.

Des buses 7 d'alimentation, fixées sur le collecteur et en nombre égal à celui des cylindres 8, du type régulateurs de pression zéro, sont destinées d'une part à contrôler la pression d'alimentation du gaz dans le moteur, en aval du doseur-distributeur de gaz, pour la réguler au voisinage de la pression atmosphérique, et d'autre part à assurer une coupure franche de l'alimentation de carburant gazeux (Fuel Cut Off, FCO) en phase de décélération.

L'architecture comporte de plus des tuyauteries de liaison entre les différents composants, un calculateur électronique 9 de contrôle moteur alimenté en carburant gazeux, qui peut être le même que le calculateur électronique de contrôle du fonctionnement à l'essence, et éventuellement des capteurs 10 de pression et de température en amont de l'actuateur de gaz.

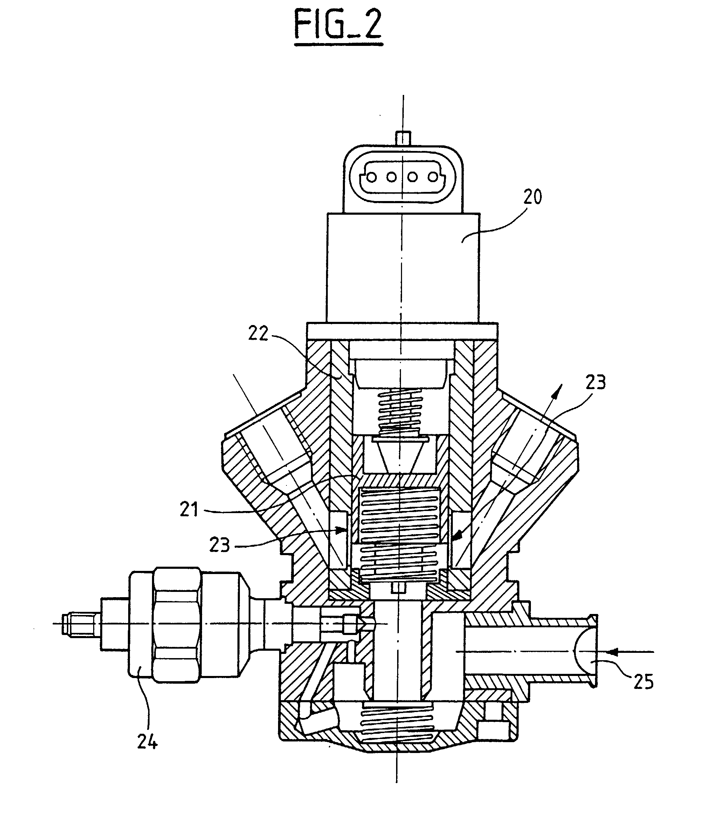

Actuellement, ce système d'injection continue de marque KOLTEC-NECAM a la particularité d'utiliser des régulateurs de pression zéro pour favoriser une coupure de l'alimentation du moteur au gaz, au droit du point d'alimentation du collecteur d'admission. La figure 2 est une vue en coupe transversale d'un actuateur doseur-distributeur de KOLTEC-NECAM, qui comporte un moteur pas à pas 20 destiné à actionner un piston 21 dans un cylindre 22. L'entrée 25 du gaz se fait perpendiculairement à l'axe longitudinal du cylindre et la sortie du gaz se fait par des fentes 23 faisant un angle aigu avec cet axe. Une électrovanne 24 de coupure en décélération est montée en bas du cylindre 22. Cet actuateur présente une dynamique de fermeture relativement faible, en raison de la lenteur du moteur pas à pas, qui nécessite l'utilisation de régulateurs de pression zéro et l'electrovanne de coupure. De plus, concernant les fentes de sortie du gaz, d'une part leur réalisation est délicate, rendant le contrôle du débit peu fiable à un coût industriel faible et la dispersion des sections offertes poste à poste plus grande, et d'autre part le fonctionnement de l'injecteur est tel que ces fentes sont découvertes partiellement, en continu, créant un débit pseudo-continu. Il en résulte une grande sensibilité de dispersion de débit de gaz, d'un injecteur à l'autre et d'un poste à l'autre pour un même injecteur, à cause de l'encrassement et de la dispersion géométrique de fabrication des fentes aux faibles débits de gaz.

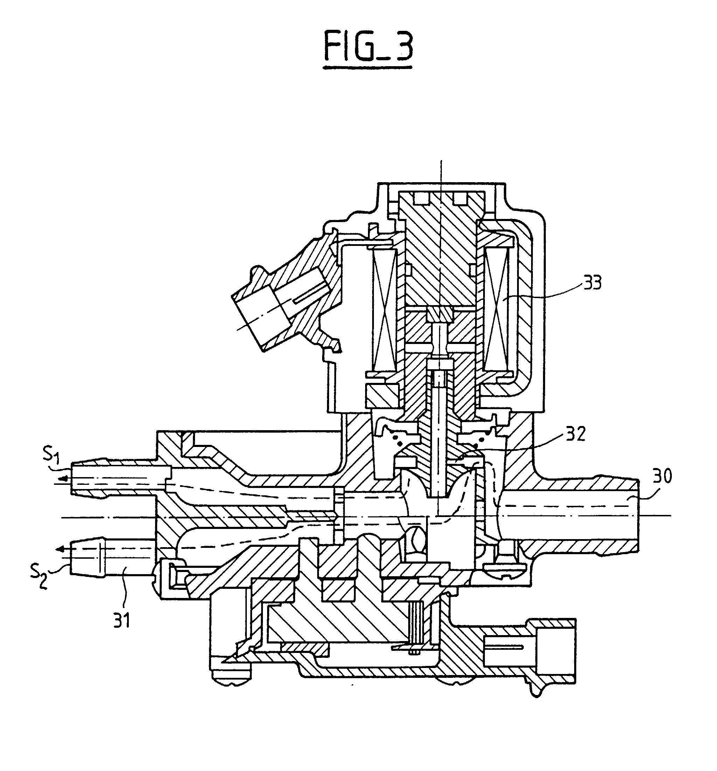

Un autre type d'actuateur de gaz, de la marque A.G., est représenté schématiquement selon une vue en coupe transversale sur la figure 3. Le dosage du flux principal de gaz, qui arrive à une pression égale à 1,8 bars en entrée 30 du composant, et sa séparation en quatre flux secondaires aux sorties 31 du composant, sont effectués séparément. Le dosage du gaz est effectué en amont de la séparation du flux par un système utilisant une soupape 32, dont la position est pilotée par un solénoïde 33. Le débit du gaz est donc de type pulsé et est contrôlé par le temps d'ouverture de la soupape. Le chemin qu'empreinte le flux principal de gaz après son dosage, représenté par des tirets, comporte un coude qui provoque une densité hétérogène du gaz, avant sa séparation en quatre flux secondaires. Il en résulte une dispersion de débit massique poste à poste, en sortie. Par ailleurs, la séparation du flux principal de gaz s'effectue en régime subsonique, ce qui a pour conséquence une sensibilité du doseur-distributeur aux variations de pression situées en aval de celui-ci. Le branchement direct du doseur sur le collecteur d'admission du moteur, sans régulateurs de pression zéro, aurait pour effet de générer des dispersions importantes de richesse cylindre à cylindre, en raison des variations de pression collecteur auxquelles cet organe serait soumis. De plus, l'acoustique d'admission du moteur serait dégradée sans les régulateurs de pression zéro.

L'invention vise à résoudre ces problèmes en proposant un injecteur de gaz jouant le rôle de doseur-distributeur, comprenant un solénoïde alimenté électriquement pour le déplacement d'un piston dans un corps cylindrique, offrant une grande dynamique de fermeture permettant la suppression de l'électrovanne de fermeture et du régulateur de pression zéro. Cet injecteur est de plus percé, non plus de fentes mais d'orifices à alésage calibré, facilement réalisables et reproductibles sans dispersion d'un injecteur à l'autre. Le débit de gaz, au droit de la section de distribution, se fait en régime globalement sonique, et de plus le doseur fonctionne en débit pulsé, c'est-à-dire que les sections de passage du gaz sont découvertes entièrement pendant une durée limitée.

Pour cela, l'objet de l'invention est un injecteur, de type doseur-distributeur, d'un système d'injection monopoint distribué d'un gaz dans les cylindres d'un moteur à combustion interne, alimenté au moins par un carburant gazeux qui est stocké dans un réservoir sous forme liquide ou comprimée, réalisé dans un corps cylindrique comportant une entrée de gaz connectée à un dispositif détendeur du gaz et un nombre de sorties égal au nombre N de cylindres du moteur, reliées chacune directement au collecteur d'admission d'air par un tuyau, caractérisé en ce que, l'entrée du gaz étant située au centre d'une première extrémité du corps cylindrique, il est de conception symétrique autour de l'axe longitudinal 6 du cylindre, en amont du dosage sur une distance déterminée pour assurer une densité homogène du flux de gaz, et en ce qu'il comporte un organe régulateur de débit du gaz dont la section débitante réalisant le contrôle du dosage constitue une séparation du flux principal du gaz entrant dans l'injecteur en N flux secondaires de sortie, identiques et indépendants les uns des autres, en régime sonique, cet organe régulateur étant piloté en débit pulsé pour assurer l'ouverture totale des N sorties de gaz pendant une durée limitée, sur une grande plage de fonctionnement.

Selon une caractéristique de l'invention, l'organe de régulation du débit de gaz est un piston coulissant dans le corps cylindrique, ouvrant et obstruant totalement les sorties de gaz vers le collecteur d'admission du moteur.

D'autres caractéristiques et avantages de l'invention apparaîtront à la lecture de la description de plusieurs modes de réalisation d'un injecteur doseur-distributeur de gaz, illustrée par les figures suivantes qui sont, outre la figure 1 concernant l'architecture d'un système d'injection multipoint gazeux et les figures 2 et 3 concernant une coupe transversale de deux exemples d'actuateur doseur de l'art antérieur :

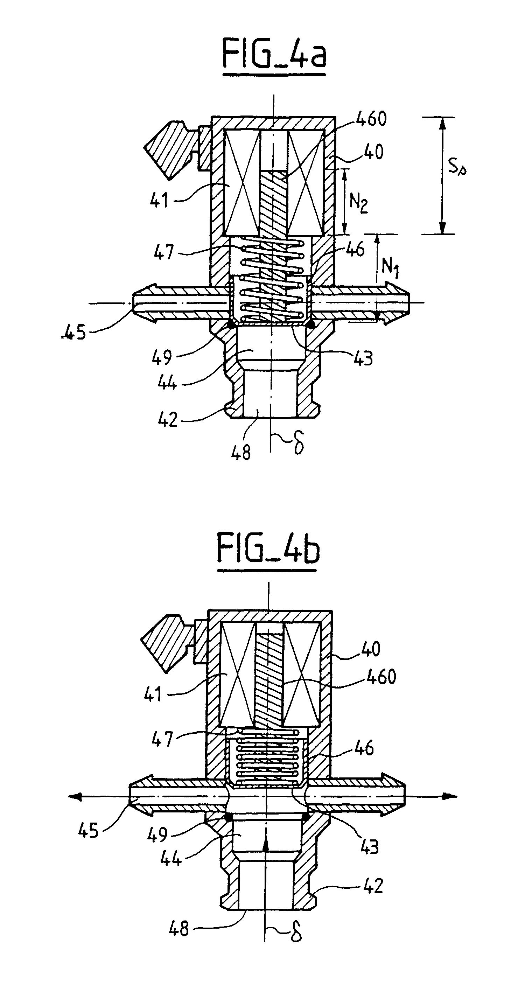

- les figures 4ₐ et 4_{b} : deux vues en coupe longitudinale d'un premier mode de réalisation d'un injecteur de gaz à piston selon l'invention, respectivement en position fermée et en position ouverte ;

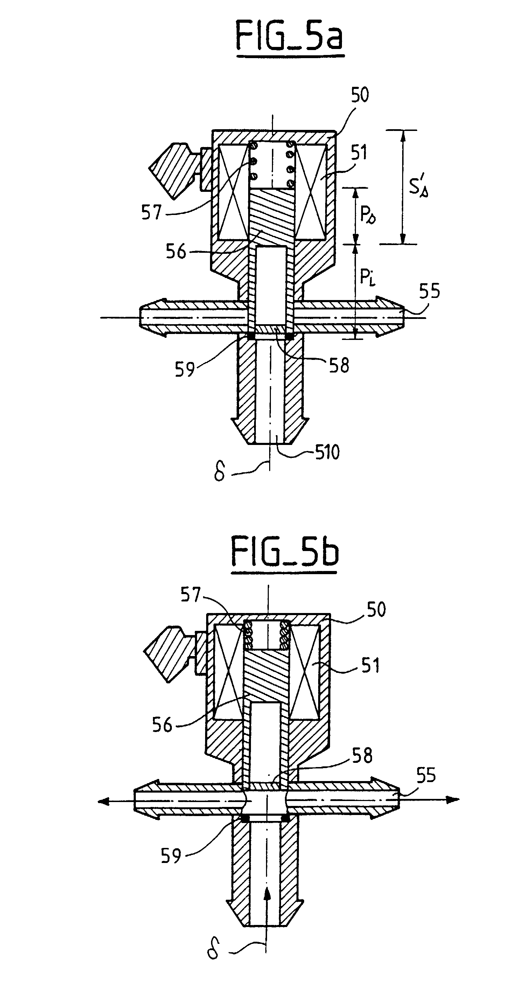

- les figures 5ₐ et 5_{b} : deux vues en coupe longitudinale d'un deuxième mode de réalisation d'un injecteur de gaz selon l'invention, respectivement en position fermée et en position ouverte ;

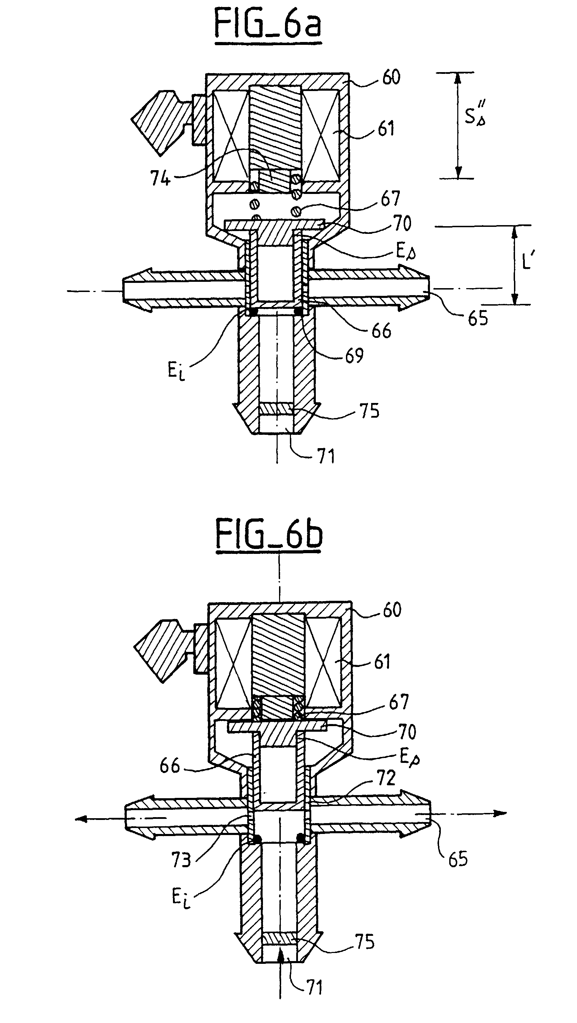

- les figures 6ₐ et 6_{b} : deux vues en coupe longitudinale d'un troisième mode de réalisation d'un injecteur de gaz selon l'invention, respectivement en position fermée et en position ouverte.

Les éléments portant les mêmes références sur les différentes figures remplissent les mêmes fonctions en vue des mêmes résultats.

Selon un premier mode de réalisation, l'injecteur doseur-distributeur de gaz selon l'invention, vu en coupe longitudinale aux figures 4ₐ et 4_{b} respectivement en position fermée et ouverte, est réalisé dans un corps cylindrique 40 d'axe longitudinal δ, comportant une entrée 48 du gaz, placée au centre d'une de ses extrémités 42 percée suivant l'axe δ longitudinal. Cette entrée est connectée à un dispositif détendeur du gaz, dans le système d'injection monopoint distribué gazeux d'un moteur à combustion interne. La conception de l'injecteur est préférentiellement symétrique, plus particulièrement en amont du dosage sur une certaine distance, pour rendre homogène la densité du gaz et pour minimiser les dispersions de débit de gaz en sortie de l'injecteur.

L'organe régulateur du débit de gaz est un piston 46 coulissant dans le corps cylindrique 40, le long de son axe longitudinal δ. Ce piston 46 est solidaire d'un noyau cylindrique de fer doux 460, de même axe longidudinal δ que le corps cylindrique 40 et dont une première partie N₁ est entourée d'un ressort 47. Le déplacement du piston est provoqué par la variation du champ magnétique, créé par un solénoïde 41 logé dans la partie supérieure Sₛ du corps cylindrique 40 et entourant la deuxième partie libre N₂ du noyau, et destiné à être parcouru par un courant électrique pour déplacer le noyau de fer doux et par conséquent comprimer ou non le ressort 47. Les N sorties 45 du gaz sont des orifices préférentiellement cylindriques, identiques et à alésages calibrés, aisément réalisables avec un outillage et un procédé de fabrication de type traditionnel. En position fermée (figure 4ₐ), le piston 46 obstrue totalement les N sorties 45 du gaz, de sorte que celui-ci reste confiné dans et en amont de la chambre 44 définie dans le corps cylindrique entre l'entrée 48 et la base 43 du piston. En position ouverte (figure 4_{b}) le ressort 47 est comprimé et le piston 46 remonte vers le solénoide 41, ouvrant les N sorties 45 simultanément.
L'étanchéité, en position fermée, est assurée par exemple par un joint 49.

Les sections au diamètre calibré, servant de passage de sortie au gaz, sont ouvertes entièrement pendant une durée limitée de sorte que l'injecteur doseur-distributeur fonctionne en débit pulsé, contrairement au fonctionnement de l'injecteur KOLTEC-NECAM en débit pseudo-continu, puisque les fentes de sortie sont découvertes partiellement en continu.

La valeur du diamètre des orifices de sortie est très inférieure à la hauteur des fentes utilisées dans cet injecteur de l'art antérieur, ce qui permet un déplacement moindre du piston pour assurer l'étanchéité à la fermeture. Les forces de frottement entre le piston et la chemise du cylindre sont réduites et la dynamique de fermeture est bien meilleure.

Grâce à la symétrie de son architecture et au régime sonique du débit de gaz, au droit de la distribution, la position ouverte garantit une indépendance des sorties entre elles.

En position fermée, l'injecteur doseur-distributeur de gaz présente une étanchéité suffisante pour ne pas dégrader l'acoustique admission, d'un poste à l'autre, et pour ne pas polluer en phase de coupure de décélération en GPL, en mode parking moteur arrêté, en mode essence ...

Dans ce mode de réalisation avec un piston, le cloisonnement physique entre les différents orifices de sortie du gaz n'est plus utile, de sorte que la conception d'un tel injecteur doseur-distributeur est encore simplifiée.

Selon un deuxième mode de réalisation d'un injecteur doseur-distributeur de gaz, vu en coupe longitudinale aux figures 5ₐ et 5_{b} en position respectivement fermée et ouverte, le diamètre du piston 56 qui coulisse dans le corps cylindrique 50 est inférieur à celui du mode de réalisation décrit aux figures 4ₐ et 4_{b} précédentes. Le piston 56 cylindrique peut se déplacer directement à l'intérieur d'un solénoïde 51 logé dans la partie supérieure S'ₛ du cylindre 50 et destiné à être parcouru par un courant électrique. Pour cela, le piston 56 est en fer doux dans sa partie supérieure Pₛ en regard du solénoïde, et a une longueur L totale telle, qu'en position fermée de l'injecteur, sa partie inférieure Pᵢ obstrue totalement les orifices de sortie 55 du gaz pendant que sa partie supérieure Pₛ, opposée à la première, est soumise aux variations du champ magnétique dans le solénoïde 51. Un ressort 57, comprimé en position ouverte, se détend pour refermer l'injecteur doseur-distributeur. Sa partie inférieure Pᵢ peut être réalisée en matériau léger, bénéficiant d'un bon coefficient de frottement avec la chemise.

Pour alléger l'injecteur doseur-distributeur, le piston 56 peut être creux au niveau de sa partie inférieure Pᵢ non soumise audit champ magnétique. Un bouchon en plastique 58 ferme la partie inférieure du piston 56 en contact avec le gaz vers l'entrée 510 du gaz. Le cylindre 50 peut être réalisé en matière plastique. Grâce à ce mode de réalisation à partir d'un piston creusé en son centre, les masses en mouvement sont faibles. L'étanchéité en position fermée est assurée par le repos du piston 56 sur un joint 59.

Comme pour le premier mode de réalisation, les N sorties du gaz sont préférentiellement des orifices cylindriques 55, et sont ouvertes totalement pendant une durée limitée, réalisant un régime pulsé.

Dans le troisième mode de réalisation, vu en coupe longitudinale aux figures 6ₐ et 6_{b}, l'injecteur doseur-distributeur est constitué comme précédemment d'un corps cylindrique 60, dans la partie supérieure S"ₛ duquel est logé un solénoïde 61, destiné à être parcouru par un courant électrique et à l'intérieur duquel est logé un noyau cylindrique 74 de fer doux entouré d'un ressort 67. L'organe régulateur du débit de gaz est un piston 66 cylindrique dont l'extrémité supérieure Eₛ, opposée à l'extrémité inférieure Eᵢ, en regard de l'entrée 71 du gaz, est solidaire d'un plateau circulaire en fer doux 70, relié au ressort 67 se détendant ou se comprimant partiellement dans le solénoïde 61. Ce plateau 70 est déplacé par le champ magnétique créé dans le solénoïde 61, quand il est parcouru par un courant électrique, ce qui comprime le ressort 67, de façon à remonter le plateau 70 solidaire du piston 66, dont la longueur L' est déterminée pour libérer les sorties 65 du gaz (figure 6_{b}). En position fermée, le ressort 67 est détendu et le piston ferme totalement les sorties 65 du gaz.

Pour alléger la structure, le piston peut être creux. Son extrémité fermée Eᵢ, en regard de l'entrée 71 du gaz, repose en position fermée sur un joint d'étanchéité 69. Le piston n'a pas besoin d'être en fer doux, et est préférentiellement en matériau léger.

Selon une variante de réalisation, le piston coulisse dans une chemise 72 ajourée par des trous 73 calibrés au niveau des orifices de sortie 65. Cette chemise est réalisée en matériau caractérisé par un bon coefficient de frottement pour faciliter le déplacement du piston. Les trous 73 sont calibrés différemment selon le type de véhicules.

Un filtre 75 en amont du dosage pourra être placé soit dans l'injecteur au niveau de l'entrée 71, soit en sortie du détendeur, soit entre le détendeur et l'injecteur.

L'actuateur gaz selon l'invention présente une très bonne dynamique d'ouverture et de fermeture.

Pour éviter la sensibilité à l'encrassement et les dispersions géométriques de fabrication, la section débitant le gaz à travers le cylindre de l'injecteur est choisie la plus grande possible aux faibles débits.

Un capteur de pression et un capteur de température pourront être placés en amont du doseur-distributeur afin de contrôler le débit massique de gaz injecté.

Il est possible, dans un système d'injection monopoint distribué gazeux, d'utiliser un nombre n/x de doseurs-distributeurs selon l'invention, à x sorties chacun, n étant le nombre de cylindres du moteur.

## Revendications

1. Injecteur, de type doseur-distributeur, d'un système d'injection monopoint distribué d'un gaz dans les cylindres d'un moteur à combustion interne, alimenté au moins par un carburant gazeux stocké dans un réservoir, sous forme liquide ou comprimée, réalisé dans un corps cylindrique comportant une entrée de gaz connectée à un dispositif détendeur du gaz et un nombre de sorties égal au nombre N de cylindres du moteur, reliées chacune directement au collecteur d'admission d'air par un tuyau, caractérisé en ce que l'entrée (48) du gaz étant située au voisinage du centre d'une première extrémité (42) du corps cylindrique (40), il est de conception symétrique autour de l'axe longitudinal (δ) du cylindre, en amont du dosage sur une distance déterminée pour assurer une densité homogène du gaz, et en ce qu'il comporte un organe régulateur de débit du gaz dont la section débitante réalisant le contrôle du dosage constitue une séparation du flux principal du gaz, entrant dans l'injecteur, en N flux secondaires de sortie, identiques et indépendants les uns des autres, en régime sonique, cet organe régulateur étant piloté en débit pulsé de sorte que les N sorties (45) de gaz sont ouvertes totalement pendant une durée limitée, sur une grande plage de fonctionnement.

2. Injecteur de gaz selon la revendication 1, caractérisé en ce que l'organe régulateur de débit du gaz est un piston (46), destiné à coulisser dans le cylindre (40) le long de son axe longitudinal (δ) et solidaire d'un noyau cylindrique (460) de fer doux, de même axe longitudinal (δ) et entouré d'un ressort (47), sur une première partie (N₁) reliée au piston et sur une deuxième partie libre (N₂), d'un solénoïde (41) alimenté électroniquement, et en ce que le déplacement du piston est provoqué par la variation du champ magnétique créé dans le solénoïde (41) entre une position fermée de l'injecteur correspondant au positionnement du piston en face de chacune des sorties (45) du gaz et une position ouverte correspondant à une compression du ressort (47) vers le solénoïde (41) pour ouvrir totalement lesdites sorties.

3. Injecteur de gaz selon la revendication 1, caractérisé en ce que, dans la partie supérieure (S'ₛ) du cylindre (50) est logé un solénoïde (51), destiné à être parcouru par un courant électrique dont les variations créent un champ magnétique et à l'intérieur duquel est fixé un ressort (57), et en ce que l'organe régulateur de débit du gaz est un piston cylindrique (56), en contact avec le ressort (57), réalisé en fer doux et ayant une longueur (L) telle qu'en position fermée de l'injecteur, le ressort étant détendu, sa partie inférieure (Pᵢ) ferme totalement les sorties (55) de gaz alors que sa partie supérieure (Pₛ) reste soumise aux variations du champ magnétique, et en position ouverte de l'injecteur, le ressort étant comprimé, sa partie inférieure (Pᵢ) ouvre totalement lesdites sorties.

4. Injecteur de gaz' selon la revendications 3, caractérisé en ce que le piston (56) cylindrique est creux au niveau de sa partie inférieure (Pᵢ) non soumise aux variations du champ magnétique créé dans le solénoïde (51) et en ce qu'il comporte un bouchon (58) associé à un joint d'étanchéité (59) en regard de l'entrée (510) du gaz.

5. Injecteur de gaz selon la revendication 1, caractérisé en ce que, dans la partie supérieure (S"ₛ) du cylindre (60) est logé un solénoïde (61), destiné à être parcouru par un courant électrique dont les variations créent un champ magnétique, et à l'intérieur duquel est logé un noyau cylindrique (74) en fer doux, entouré d'un ressort (67), et en ce que l'organe régulateur de débit du gaz est un piston (66) cylindrique, dont l'extrémité supérieure (Eₛ), opposée à l'extrémité inférieure (Eᵢ) en regard de l'entrée (71) du gaz, est solidaire d'un plateau circulaire (70) en fer doux relié au ressort (67) et dont la longueur (L') est déterminée de façon à ce que le piston obstrue totalement les sorties (65) du gaz en position fermée de l'injecteur et les ouvre totalement en position ouverte.

6. Injecteur de gaz selon la revendication 5, caractérisé en ce que le piston (66) cylindrique est creux et comporte un joint d'étanchéité (69) au niveau de son extrémité inférieure (Eᵢ) en regard de l'entrée (71) du gaz.

7. Injecteur de gaz selon l'une des revendications 1 à 6, caractérisé en ce qu'il comporte de plus un filtre placé, en amont du dosage, à l'entrée de l'injecteur, ou en sortie du détendeur, ou entre le détendeur et l'injecteur.

8. Injecteur de gaz selon l'une des revendications 1 à 6, caractérisé en ce qu'il comporte de plus des capteurs de pression et de température, implantés en amont de la section débitante de l'organe régulateur de débit et destinés à contrôler le débit massique du gaz injecté.

9. Injecteur de gaz selon la revendication 8, caractérisé en ce que la pression en amont de la section régulatrice de débit est égale ou supérieure à 1,9 fois la pression en aval.

10. Système d'injection monopoint distribué gazeux pour moteur à combustion interne alimenté au moins par un carburant gazeux, caractérisé en ce qu'il comporte un nombre (n/x) injecteurs doseurs-distributeurs selon l'une des revendications 1 à 9, à (x) sorties chacun, (n) étant le nombre de cylindres du moteur.
